# EUROPEAN PATENT SPECIFICATION

(11) **EP 3 734 145 B1**
(45) Date of publication and mention of the grant of the patent: **01.11.2023**
(21) Application number: 18897034.7
(22) Date of filing: 27.09.2018
(51) Int. Cl.: F21S 10/02, F21V 1/20, F21S 8/00, F21S 10/00, G02B 5/20, G02B 5/00, G03B 21/20

(54) **COLOR TEMPERATURE COMPENSATION GOBO, AND COLOR TEMPERATURE COMPENSATION SYSTEM AND COLOR TEMPERATURE COMPENSATION METHOD THEREOF**
FARBTEMPERATURKOMPENSATIONSBLENDENSCHIRM UND FARBTEMPERATURKOMPENSATIONSSYSTEM UND FARBTEMPERATURKOMPENSATIONSVERFAHREN DAFÜR
DÉCALQUE DE COMPENSATION DE TEMPÉRATURE DE COULEUR ET SYSTÈME DE COMPENSATION DE TEMPÉRATURE DE COULEUR ET SON PROCÉDÉ DE COMPENSATION DE TEMPÉRATURE DE COULEUR

(30) Priority: 26.12.2017 CN 201711437134
(43) Date of publication of application: 04.11.2020
(73) Proprietor: Guangzhou Haoyang Electronic Co., Ltd., Guangzhou, Guangdong 511450 (CN)
(72) Inventor: JIANG, Weikai, Guangzhou, Guangdong 511450 (CN)
(74) Representative: Puschmann Borchert Kaiser Klettner Patentanwälte Partnerschaft mbB
(86) International application number: PCT/CN2018/107827
(87) International publication number: WO 2019/128352

(56) References cited:
- EP-A1- 0 253 081
- EP-A1- 2 918 899
- CN-A- 102 867 900
- CN-A- 103 851 524
- CN-A- 107 228 301
- CN-A- 108 050 477
- CN-U- 206 330 091
- CN-U- 206 771 249
- CN-U- 207 750 922
- CN-Y- 201 284 941
- JP-A- 2002 352 605
- KR-B1- 101 682 704
- US-A1- 2009 323 032

## Description

The present invention relates to the technical field of stage lights, and in particular to a color temperature compensation gobo, a color temperature compensation system and a color temperature compensation method.

Color temperature is a unit of measurement that indicates color components of light. Theoretically, color temperature refers to the color of an absolute black body presented after heated from the absolute zero, i.e. -273 °C. After the black body is heated, it gradually changes from black to red, yellow, and white, and finally emits blue light. When the black body is heated to a certain temperature, the spectral component of the light emitted by the black body is so called color temperature at such temperature, in the unit of measurement "K" (Kelvin). If the light emitted by a certain light source contains the same spectral component as that in the light emitted by the black body at a certain temperature, it is thus called color temperature of certain K, for example, if the color of light emitted by a 100 W light bulb is the same as that of an absolute black body at 2527 K, the color temperature of light emitted by this light bulb is 2800 K, i.e. 2527 K plus 273 K.

As the name implies, a color temperature gobo is mainly used to adjust the color temperature of light. Especially, it plays a very important role in stage performances and film shooting. As it helps to show the content of the program, reflects the author's creative intention and sets off the artistic atmosphere. However, the color temperature gobo or color temperature adjusting gobo provided in the prior art is mainly used for adjusting the the color temperature intensity or cold/warm tone of the light spot, which mainly plays a role of changing the color temperature, and does not really solve the problem that the color temperature of light from the light source is different from the color temperature of light projected from the light source only through a projection lens due to the light absorption characteristic of a glass substrate and the reflection characteristic of a reflection film to the light source and other factors in the transmission path of the light source, thus failing to meet design requirements.

US 2009/323032 A1 discloses a light pattern generator that can used to form a gobo for use in a projection optical system, including a transparent substrate for placement in the light beam with selective coatings on certain areas to form the image. The coatings include a release layer, a dark mirror coating, and a highly reflective coating. The laser light is conveyed through the substrate, then contacts the release layer, which is vaporized in the lo-cation of the laser application. This thus ablates the release layer, the dark mirror coating, and a highly reflective coating. By pulsing the laser and moving the beam, an image is written onto the generator, thereby forming a gobo from the substrate.

It is therefore an object of the present invention to provide a color temperature compensation gobo free from the aforesaid drawbacks of the prior art, which is simple in structure and high in practicability and capble of compensating for the color temperature of light passing through a gobo, so that the color temperature of projected light passing through the gobo is basically consistent with the color temperature of projected light not passing through the gobo when imaging is performed by a projection lens, and the color temperature compensation gobo can meet color temperature standards for projected light.

According to the present invention, the color temperature compensation gobo comprises a gobo substrate and a light shielding film made of an opaque material. The light shielding film is attached to the gobo substrate and is provided with hollowed-out carvings.

The color temperature compensation gobo further comprises a color temperature compensation film, which is attached to the gobo substrate or the light shielding film and used for compensating for the color temperature of light through the gobo substrate and the light shielding film in an optical path to keep the color temperature of the light basically consistent before and after passing through the gobo substrate or the light shielding film.

A gobo of a conventional stage imaging light is usually made of glass, which is usually made of a glass substrate and a light shielding film. Through laser engraving, the light shielding film on different glass gobos is carved and hollowed out to form different patterns. When a light source illuminates the glass gobo and the gobo is imaged by the projection lens, a hollowed-out pattern shape can be projected.

In the present invention, the light shielding film is made of an opaque material and has a light shading effect. As the light shielding film is provided with the hollowed-out carvings, when light passes through the light shielding film, except that the part of hollowed-out carvings can be projected, other parts of the gobo are shielded by the light shielding film and the light cannot pass therethrough, thereby projecting a pattern shape meeting requirements of stage performances. The color temperature compensation film is used for compensating for the color temperature difference when light passes through the gobo substrate and the light shielding film, so as to avoid the color temperature error caused by reflection, refraction, absorption, light superposition or the influence of LED fluorescent powder in the propagation process of light in an optical system. Therefore, the color temperature compensation film is mainly used to correct the color temperature deviation of the light in the optical path to keep the color temperature of the projected light passing through the gobo substrate basically consistent with the color temperature of the projected light not passing through the gobo substrate, thereby improving the stability of light output quality of a light, and making the color temperature for the stage performance closer to reality.

The color temperature compensation film is a transparent or semitransparent medium with a color.

Since the color temperature compensation film involves compensating for color components of light, the color temperature compensation film has a color, and the color setting of the color temperature compensation film is obtained mainly by setting a film system of the color temperature compensation film. The color temperature compensation film reflects a specific spectrum and changes the spectrum of the projected light, so that a target color temperature value is obtained, and the spectral reflectance, color and material of the color temperature compensation film are designed according to the target color temperature value so as to obtain a color temperature compensation film meeting requirements.

The color temperature compensation gobo further comprises a total reflection film, which is attached to the gobo substrate, the light shielding film or the color temperature compensation film, has the same hollowed-out carvings as the light shielding film and is used for intercepting light that does not need to be projected no projection.

As the gobo substrate absorbs heat while receiving light, when the working time is too long, the heat of the light source is transferred to the gobo substrate all the time, which will cause excessive heat of the gobo and affect the service life; therefore, the light emitted by the light source is reflected by the total reflection film, which can prevent excessive heat of the gobo substrate. However, the reflection film reflects the light emitted by the light source while emitting heat, resulting in that the color temperature of the light projected onto the stage is deviated. Therefore, the color temperature compensation film not only compensates for the color temperature of the light passing through the gobo substrate and the light shielding film, but also compensates for the color temperature of the light passing through the total reflection film. Generally, when the light emitted by the light source and the light reflected by the total reflection film are overlapped and emitted, the color temperature of the light is lost. Therefore, the color temperature compensation film generally mainly performs compensation of increasing the color temperature of the light in the optical path, so that the color temperature of the light in the optical path after passing through the gobo substrate is kept basically consistent with the color temperature of the light not passing through the gobo substrate.

The total reflection film, the light shielding film, the color temperature compensation film, and the gobo substrate are attached to each other in any order.

The gobo substrate is common glass, quartz glass or sapphire glass.

Compared with a metal material, the glass material is more sensitive to color temperature, and the gobo substrate made of the glass material is smoother, and the pattern is not prone to deformation and is more detailed.

The color temperature compensation film comprises a color temperature increasing compensation film and a color temperature decreasing compensation film.

The color temperature increasing compensation film and the color temperature decreasing compensation film are respectively used to perform compensation of increasing the color temperature and compensation of reducing the color temperature, and the functions of increasing and reducing the color temperature are mainly to reduce a color temperature difference between the color temperature of light in the optical path after passing through the gobo substrate, the light shielding film or the reflection film and the color temperature of light in the optical path not passing through the gobo substrate, the light shielding film or the reflection film, so that the color temperature of light in the optical path after passing through the color temperature compensation gobo is kept basically consistent with the color temperature of the projected light not passing through the color temperature compensation gobo. However, color temperature increasing and color temperature decreasing in the prior art mainly refer to the adjustment of cold and warm light for the color temperature, which is essentially different from the color temperature increasing and decreasing compensation described in this patent.

The color temperature compensation film is made of cerium oxide, potassium iodide or silicon oxide.

The present invention further provides a color temperature compensation system, comprising the aforesaid color temperature compensation gobo, a light source and a projection lens, wherein the color temperature compensation gobo is arranged between the light source and the projection lens, and light emitted by the light source sequentially passes through the color temperature compensation gobo and the projection lens to project a pattern with a color temperature conforming to standards.

In this color temperature compensation system, projecting a pattern with a color temperature conforming to the standard mainly refers to performing color temperature compensation setting on the color temperature compensation gobo, so that the color temperature of light emitted by the light source and directly projected by the projection lens is kept basically consistent with the color temperature of light emitted by the light source, passing through the color temperature compensation gobo and then projected by the projection lens.

The present invention also provides a color temperature compensation method, wherein a color temperature compensation film, a gobo substrate, a light shielding film, a total reflection film, a light source and a projection lens are comprised, and the color temperature compensation film, the light shielding film, the total reflection film and the gobo substrate are attached to each other in any order to form a color temperature compensation gobo, the color temperature compensation gobo being arranged between the light source and the projection lens and is used for partially shielding light in an optical path to form a pattern and performing color temperature compensation on the pattern. The color temperature compensation method comprises the steps of:
S1: performing film system design on the color temperature compensation film to obtain a target color temperature compensation film with a color temperature compensation range conforming to regulations;
S2: respectively attaching the light shielding film, the total reflection film, and the color temperature compensation film obtained in step S1 to the gobo substrate in any order to obtain a color temperature compensation gobo;
S3: mounting the color temperature compensation gobo obtained in step S2 on a gobo wheel, and mounting the gobo wheel between the light source and the projection lens, so as to form a color temperature compensation system when optical centers of the light source, the projection lens and the color temperature compensation gobo are on the same straight line; and
S4: turning on the light source, so that the color temperature compensation system operates, and the color temperature compensation film on the color temperature compensation gobo adjusts the color temperature of mixed light, so as to compensate for color temperature changes of the light from the light source caused by the reflection or refraction or absorption of the light by the gobo substrate, the light shielding film and the total reflection film, and to reduce the difference in color temperature between the projected light and projected light that does not pass through the gobo substrate, making the projected light passing through the gobo substrate basically consistent with the projected light not passing through the gobo substrate in terms of color temperature.

The film system design method for the color temperature compensation film in step S1 comprises:
S1-1: designing two groups of systems, wherein the first group of systems does not comprise color temperature compensation gobos, the second group of systems comprises gobo substrates, and a light shielding film and a total reflection film are attached to the gobo substrate;
S1-2: obtaining spectral parameters of light projected from the two groups of systems, wherein the spectral parameters of the first group of systems are reference spectral parameters, and the spectral parameters of the second group of systems are calibration spectral parameters;
S1-3: according to the difference between the reference spectral parameters and the calibration spectral parameters obtained in step S1-2, and by taking the reference spectral parameters as a reference standard, calculating a spectral parameter value required to be adjusted and compensated for by the color temperature compensation film, thereby designing a spectral parameter of the color temperature compensation film; and
S1-4: designing the color temperature compensation film according to the spectral parameter obtained in step S1-3.

The color temperature parameters of the color temperature compensation film are obtained through step S1-3, and wavelength parameters and other optical characteristics of the color temperature compensation film, such as the color and spectral reflectance of the color temperature compensation film, are determined, such that the characteristics such as the material of the color temperature compensation film are further determined.

In the present invention, in step S4, the difference in color temperature between the light projected by the color temperature compensation system and the light projected by the first group of systems in step S1-2 is smaller than that between the light projected by the second group of systems and the light projected by the first group of systems in step S1-2.

Compared with the prior art, the present invention performs color temperature compensation on the gobo through the color temperature compensation film, so that when imaging is performed by the projection lens, the color temperature of the projected light thereof is basically consistent with the color temperature of projected light that does not pass through the gobo, and the color temperature of the projected light of a light meets the standard. Meanwhile, the present invention has the beneficial effects of a simple structure and high practicability. Further advantages, features and potential applications of the present invention may be gathered from the description which follows, in conjunction with the embodiments illustrated in the drawings. In the drawings is shown
FIG. 1 is a structural schematic diagram of a color temperature compensation gobo in side view according to Embodiment 1 of the present invention.
FIG. 2 is a structural schematic diagram of a color temperature compensation gobo in front view according to the present invention.
FIG. 3 is a structural schematic diagram of a color temperature compensation system according to the present invention.
FIG. 4 is a structural schematic diagram of a color temperature compensation gobo in side view according to Embodiment 2 of the present invention.

In order to make the objective, technical solutions and advantages of the present invention clearer, the embodiments of the present invention are further described in detail below with reference to the accompanying drawings.

Apparently, the embodiments of the present invention are some rather than all of the embodiments thereof. Generally, the components of the embodiments of the present invention described and shown in the accompanying drawings may be arranged and designed in various different configurations. Therefore, the following detailed description of the embodiments of the present invention, which are set forth in the accompanying drawings, is not intended to limit the scope of protection of the present invention, but merely represents selected embodiments of the present invention. Based on the embodiments of the present invention, all other embodiments obtained by those of ordinary skill in the art without involving any inventive effort fall within the scope of protection of the present invention.

### Embodiment 1

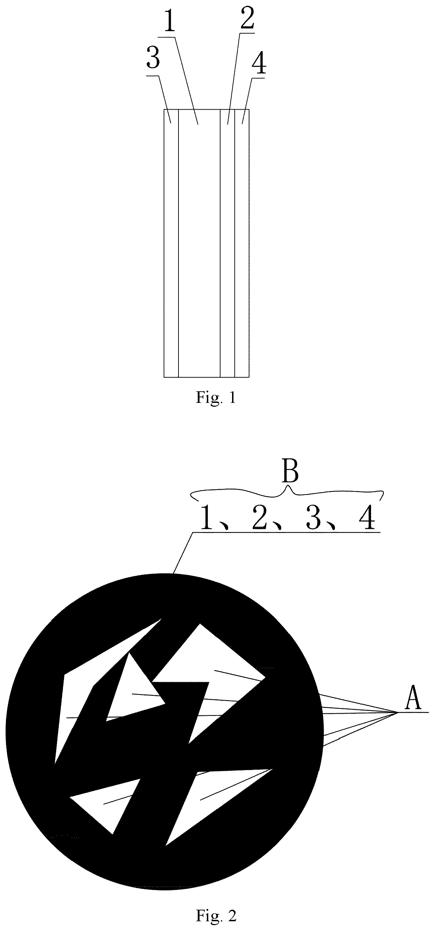

As shown in FIG. 1, a color temperature compensation gobo comprises a gobo substrate 1, a light shielding film 2, a color temperature compensation film 3 and a total reflection film 4. The light shielding film 2 and the color temperature compensation film 3 are respectively attached to the front side and back side of the gobo substrate 1, the total reflection film 4 is attached to the light shielding film 2. The light shielding film 2 has a light shielding effect and is used for intercepting light that does not need to be projected. The total reflection film 4 has the function of reflecting light, which is used for reflecting light that does not need to be projected and can also avoid damages caused by excessive heat resulting from light energy absorption of the gobo substrate 1. The color temperature compensation film 3 is used for compensating for the color temperature of the light in the optical path, so that the color temperature of the light in the optical path after passing through the gobo substrate 1, the light shielding film 2 and the total reflection film 4 is kept basically consistent with the color temperature of light not passing through the gobo substrate 1, the light shielding film 2 and the total reflection film 4.

As shown in FIG. 2, the light shielding film 2, the color temperature compensation film 3 and the total reflection film 4 are respectively attached to the gobo substrate 1 to form a color temperature compensation gobo B, and the color temperature compensation gobo B is provided with hollowed-out carvings A, so that when the light in the optical path passes through the color temperature compensation gobo B, the light can only be projected from the hollowed-out carvings A, while other positions except the hollowed-out carvings A are shielded by the light shielding film 2, thereby projecting a required pattern shape.

The material of the gobo substrate 1 comprises common glass, quartz glass or sapphire glass. Compared with a metal material, the gobo substrate made of the glass material is smoother and is not prone to deformation when heated, and the pattern can be designed more detailed. And the glass material does not easily cause color temperature drift.

The color temperature compensation film 3 comprises a color temperature increasing compensation film and a color temperature decreasing compensation film. The material of the color temperature compensation film 3 comprises cerium oxide, potassium iodide or silicon oxide, but are not limited thereto.

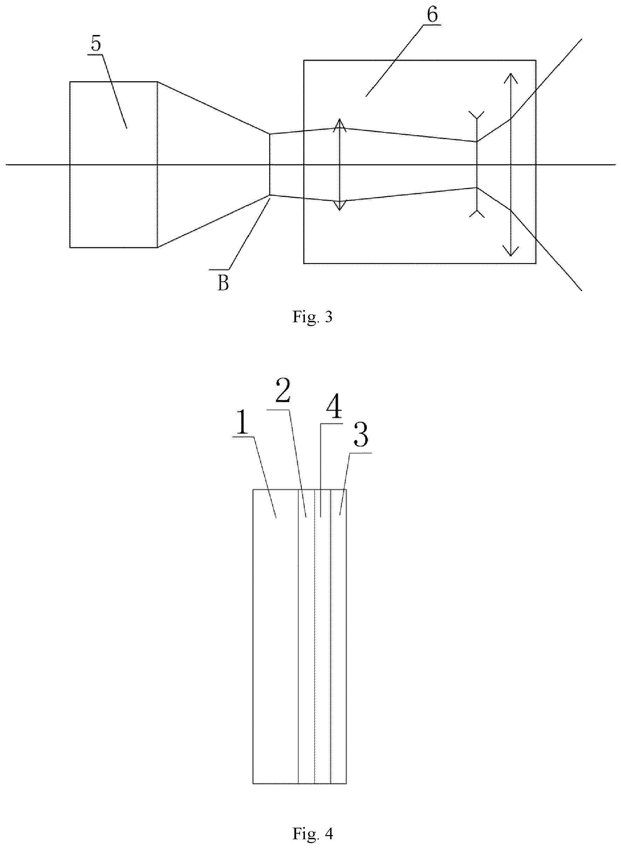

As shown in FIG. 3, a color temperature compensation system comprising the foresaid color temperature compensation gobo is provided, which further comprises a light source 5 and a projection lens 6. The color temperature compensation gobo B is arranged between the light source 5 and the projection lens 6, so that light emitted by the light source 5 sequentially passes through the color temperature compensation gobo B and the projection lens 6 to project a pattern with a color temperature conforming to standards.

In this embodiment, a color temperature compensation method is further provided, comprising the steps of:
S1: performing film system design on the color temperature compensation film 3 to obtain a target color temperature compensation film with a color temperature compensation range conforming to regulations;
S2: respectively attaching the light shielding film 2 and the color temperature compensation film 3 obtained in step S1 to the front and back side of the gobo substrate 1, and attaching the total reflection film 4 to the other side of the light shielding film 2, so as to obtain a color temperature compensation gobo B;
S3: mounting the color temperature compensation gobo B obtained in step S2 on a gobo wheel, and mounting the gobo wheel between the light source 5 and the projection lens 6, so as to form a color temperature compensation system when optical centers of the light source 5, the projection lens 6 and the color temperature compensation gobo B are on the same straight line; and
S4: turning on the light source, so that the color temperature compensation system operates, and the color temperature compensation film 3 on the color temperature compensation gobo B adjusts the color temperature of mixed light, so as to compensate for color temperature changes of the light from the light source caused by the reflection or refraction or absorption of the light by the gobo substrate 1, the light shielding film 2 and the total reflection film 4, and to reduce the difference in color temperature between the projected light passing through the gobo substrate 1 and the projected light that does not pass through the gobo substrate 1, making the projected light basically consistent with the projected light not passing through the gobo substrate 1 in terms of color temperature.

Further, the film system design method for the color temperature compensation film 3 in step S1 comprises:
S1-1: designing two groups of systems, wherein the first group of systems is not provided with color temperature compensation gobos B, the second group of systems is provided with gobo substrates 1, and a light shielding film 2 and a total reflection film 4 are attached to the gobo substrate 1;
S1-2: obtaining spectral parameters of light projected from the two groups of systems, wherein the spectral parameters of the first group of systems are reference spectral parameters, and the spectral parameters of the second group of systems are calibration spectral parameters;
S1-3: according to the difference between the reference spectral parameters and the calibration spectral parameters obtained in step S1-2, and by taking the reference spectral parameters as a reference standard, calculating a spectral parameter value required to be adjusted and compensated for by the color temperature compensation film, thereby designing a spectral parameter of the color temperature compensation film; and
S1-4: designing the color temperature compensation film 3 according to the spectral parameter obtained in step S1-3.

In this embodiment, in step S4, the difference in color temperature between the light projected by the color temperature compensation system and the light projected by the first group of systems in step S 1-2 is smaller than that between the light projected by the second group of systems and the light projected by the first group of systems in step S1-2.

### Embodiment 2

As shown in FIG. 4, this embodiment differs from Embodiment 1 in that the light shielding film 2, the total reflection film 4, and the color temperature compensation film 3 in this embodiment are sequentially arranged behind the gobo substrate 1.

### List of reference signs

- 1: gobo substrate
- 2: light shielding film
- 3: color temperature compensation film
- 4: total reflection film
- 5: light source
- 6: projection lens
- A: hollowed-out carvings
- B: color temperature compensation gobo

## Claims

1. A color temperature compensation gobo (B), comprising
a gobo substrate (1), and
a light shielding film (2) being attached to the gobo substrate (1),
wherein the light shielding film (2) is made of an opaque material and provided with hollowed-out carvings (A), **characterized in that**
a color temperature compensation film (3) is attached to the gobo substrate (1) or the light shielding film (2), which is used for compensating for the color temperature of light through the gobo substrate (1) and the light shielding film (2) in an optical path to keep the color temperature of the projected light passing through the gobo substrate basically consistent with the color temperature of the projected light not passing through the gobo substrate.

2. The color temperature compensation gobo according to claim 1, **characterized in that** the color temperature compensation film (3) is a transparent or semitransparent medium with a color.

3. The color temperature compensation gobo according to claim 1, **characterized in that** the color temperature compensation gobo (B) further comprises a total reflection film (4) being attached to the gobo substrate (1), the light shielding film (2) or the color temperature compensation film (3), with the same hollowed-out carvings (A) as the light shielding film (2) and used for intercepting light that does not need to be projected.

4. The color temperature compensation gobo according to claim 3, **characterized in that** the total reflection film (4), the light shielding film (2), the color temperature compensation film (3), and the gobo substrate (1) are attached to each other in any order.

5. The color temperature compensation gobo according to claim 1, **characterized in that** the gobo substrate (1) is common glass, quartz glass or sapphire glass.

6. The color temperature compensation gobo according to claim 1, **characterized in that** the color temperature compensation film (3) comprises a color temperature increasing compensation film and a color temperature decreasing compensation film.

7. The color temperature compensation gobo according to claim 1, **characterized in that** the color temperature compensation film (3) is made of cerium oxide, potassium iodide or silicon oxide.

8. A color temperature compensation system comprising a color temperature compensation gobo (B) according to any one of claims 1 to 7, **characterized in that** the system further comprises a light source (5) and a projection lens (6), the color temperature compensation gobo (B) is arranged between the light source(5) and the projection lens (6), and light emitted by the light source (5) sequentially passes through the color temperature compensation gobo (B) and the projection lens (6) to project a pattern with a color temperature conforming to standards.

9. A color temperature compensation method, **characterized in that** a color temperature compensation film (3), a gobo substrate (1), a light shielding film (2), a total reflection film (4), a light source (5) and a projection lens (6) are comprised, and the color temperature compensation film (3), the light shielding film (2), the total reflection film (4) and the gobo substrate (1) are attached to each other in any order to form a color temperature compensation gobo (B), the color temperature compensation gobo (B) is arranged between the light source (5) and the projection lens (6) and is used for partially shielding light in an optical path to form a pattern and performing color temperature compensation on the pattern, the color temperature compensation method comprising the steps of:
S1: performing film system design on the color temperature compensation film (3) to obtain a target color temperature compensation film with a color temperature compensation range conforming to regulations;
S2: respectively attaching the light shielding film (2), the total reflection film (4), and the color temperature compensation film (3) obtained in step S1 to the gobo substrate (1) in any order to obtain a color temperature compensation gobo (B);
S3: mounting the color temperature compensation gobo (B) obtained in step S2 on a gobo wheel, and mounting the gobo wheel between the light source (5) and the projection lens (6), so as to form a color temperature compensation system when optical centers of the light source (5), the projection lens (6) and the color temperature compensation gobo (B) are on the same straight line; and
S4: turning on the light source (5), so that the color temperature compensation system operates, and the color temperature compensation film (3) on the color temperature compensation gobo (B) adjusts the color temperature of light in the optical path, so as to compensate for color temperature changes of the light from the light source caused by the reflection or refraction or absorption of the light by the gobo substrate (1), the light shielding film (2) and the total reflection film (4), and to reduce the difference in color temperature between the projected light and projected light that does not pass through the gobo substrate (1), making the projected light passing through the gobo substrate (1) similar to the projected light not passing through the gobo substrate (1) in terms of color temperature.

10. The color temperature compensation method according to claim 9, **characterized in that** the film system design method for the color temperature compensation film (3) in step S1 comprises:
S1-1: designing two groups of systems, wherein the first group of systems does not comprise color temperature compensation gobos, the second group of systems comprises a gobo substrate (1), and a light shielding film (2) and a total reflection film (4) are attached to the gobo substrate (1);
S1-2: obtaining spectral parameters of light projected from the two groups of systems, wherein the spectral parameters of the first group of systems are reference spectral parameters, and the spectral parameters of the second group of systems are calibration spectral parameters;
S1-3: according to the difference between the reference spectral parameters and the calibration spectral parameters obtained in step S1-2, and by taking the reference spectral parameters as a reference standard, calculating a spectral parameter value required to be adjusted and compensated for by the color temperature compensation film (3), thereby designing a spectral parameter of the color temperature compensation film; and
S1-4: designing the color temperature compensation film (3) according to the spectral parameter obtained in step S1-3.

## Patentansprüche

1. Farbtemperaturkompensations-Gobo, umfassend:
ein Gobo-Substrat (1), und
eine an dem Gobo-Substrat (1) angebrachte Lichtabschirmungsfolie (2), wobei die Lichtabschirmungsfolie (2) aus einem lichtundurchlässigen Material besteht und darin eingebrachte Gravuren (A) aufweist, **dadurch gekennzeichnet, dass** an dem Gobo-Substrat (1) oder der Lichtabschirmungsfolie (2) eine Farbtemperaturkompensationsfolie (3) angebracht ist, die zur Kompensation der Farbtemperaturtemperatur von Licht eingesetzt wird, welches das Gobo-Substrat (1) und die Lichtabschirmungsfolie (2) in einem Strahlengang durchläuft, um die Farbtemperatur des durch das Gobo-Substrat hindurch verlaufenden projizierten Lichts im Wesentlichen mit der Farbtemperatur des nicht durch das Gobo-Substrat hindurch verlaufenden projizierten Lichts konsistent zu halten.

2. Farbtemperaturkompensations-Gobo nach Anspruch 1, **dadurch gekennzeichnet, dass** es sich bei der Farbtemperaturkompensationsfolie (3) um ein transparentes oder halbtransparentes Medium mit einer Farbe handelt.

3. Farbtemperaturkompensations-Gobo nach Anspruch 1, **dadurch gekennzeichnet, dass** das Farbtemperaturkompensations-Gobo (B) des Weiteren eine an dem Gobo-Substrat (1), der Lichtabschirmungsfolie (2) oder der Farbtemperaturkompensationsfolie (3) angebrachte Totalreflexionsfolie (4) umfasst, die dieselben darin eingebrachten Gravuren (A) wie die Lichtabschirmungsfolie (2) aufweist und zum Abfangen von nicht zu projizierendem Licht verwendet wird.

4. Farbtemperaturkompensations-Gobo nach Anspruch 3, **dadurch gekennzeichnet, dass** die Totalreflexionsfolie (4), die Lichtabschirmungsfolie (2), die Farbtemperaturkompensationsfolie (3) und das Gobo-Substrat (1) in beliebiger Reihenfolge aneinander befestigt sind.

5. Farbtemperaturkompensations-Gobo nach Anspruch 1, **dadurch gekennzeichnet, dass** das Gobo-Substrat (1) aus gewöhnlichem Glas, Quarzglas oder Saphirglas besteht.

6. Farbtemperaturkompensations-Gobo nach Anspruch 1, **dadurch gekennzeichnet, dass** die Farbtemperaturkompensationsfolie (3) eine Kompensationsfolie zum Steigern der Farbtemperatur und eine Kompensationsfolie zum Senken der Farbtemperatur umfasst.

7. Farbtemperaturkompensations-Gobo nach Anspruch 1, **dadurch gekennzeichnet, dass** die Farbtemperaturkompensationsfolie (3) aus Ceroxid, Kaliumjodid oder Siliziumoxid besteht.

8. Farbtemperaturkompensationssystem mit einem Farbtemperaturkompensations-Gobo (B) nach einem der Ansprüche 1 bis 7, **dadurch gekennzeichnet, dass** das System des Weiteren eine Lichtquelle (5) und ein Projektionsobjektiv (6) umfasst, wobei das Farbtemperaturkompensations-Gobo (B) zwischen der Lichtquelle (5) und dem Projektionsobjektiv (6) angeordnet ist und von der Lichtquelle (5) abgestrahltes Licht der Reihe nach durch das Farbtemperaturkompensations-Gobo (B) und das Projektionsobjektiv (6) hindurch verläuft, um ein Muster mit einer standardkonformen Farbtemperatur zu projizieren.

9. Farbtemperaturkompensationsverfahren, **dadurch gekennzeichnet, dass** darin eine Farbtemperaturkompensationsfolie (3), ein Gobo-Substrat (1), eine Lichtabschirmungsfolie (2), eine Totalreflexionsfolie (4), eine Lichtquelle (5) und ein Projektionsobjektiv (6) umfasst sind, und die Farbtemperaturkompensationsfolie (3), die Lichtabschirmungsfolie (2), die Totalreflexionsfolie (4) und das Gobo-Substrat (1) zur Bildung eines Farbtemperaturkompensations-Gobos (B) in beliebiger Reihenfolge aneinander angebracht werden, wobei das Farbtemperaturkompensations-Gobo (B) zwischen der Lichtquelle (5) und dem Projektionsobjektiv (6) angeordnet ist und zum teilweisen Abschirmen von Licht in einem Strahlengang eingesetzt wird, um ein Muster zu bilden und das Muster einer Farbtemperaturkompensation zu unterziehen, wobei das Farbtemperaturkompensationsverfahren folgende Schritte umfasst:
S1: Entwickeln eines Foliensystems für die Farbtemperaturkompensationsfolie (3) im Hinblick auf den Erhalt einer Zielfarbtemperaturkompensationsfolie mit standardkonformem Farbtemperaturkompensationsbereich;
S2: Anbringen der Lichtabschirmungsfolie (2), der Totalreflexionsfolie (4) bzw. der in Schritt S1 hergestellten Farbtemperaturkompensationsfolie (3) auf dem Gobo-Substrat (1) in beliebiger Reihenfolge, um ein Farbtemperaturkompensations-Gobo (B) zu erhalten;
S3: Anbringen des in Schritt S2 hergestellten Farbtemperaturkompensations-Gobos (B) auf einem Goborad und Anbringen des Goborads zwischen der Lichtquelle (5) und der Projektionslinse (6), sodass sich ein Farbtemperaturkompensationssystem ergibt, wenn die optischen Zentren der Lichtquelle (5), des Projektionsobjektivs (6) und des Farbtemperaturkompensations-Gobos (B) auf der gleichen Geraden liegen; und
S4: Einschalten der Lichtquelle (5), sodass das Farbtemperaturkompensationssystem in Betrieb ist und mit der auf dem Farbtemperaturkompensations-Gobo (B) angebrachten Farbtemperaturkompensationsfolie (3) eine Einstellung der Farbtemperatur des Lichts im Strahlengang erfolgt, um dadurch Farbtemperaturveränderungen des von der Lichtquelle abgestrahlten Lichts infolge von Reflexion oder Brechung oder Absorption des Lichts durch das Gobo-Substrat (1), die Lichtabschirmungsfolie (2) und die Totalreflexionsfolie (4) zu kompensieren und die Farbtemperaturdifferenz zwischen dem projizierten Licht und dem nicht durch das Gobo-Substrat (1) hindurch verlaufenden Licht zu verringern, um dadurch das durch das Gobo-Substrat (1) hindurch verlaufende projizierte Licht hinsichtlich der Farbtemperatur dem nicht durch das Gobo-Substrat (1) hindurch verlaufenden projizierten Licht anzugleichen.

10. Farbtemperaturkompensationsverfahren nach Anspruch 9, **dadurch gekennzeichnet, dass** das Verfahren zum Gestalten des Foliensystems für die Farbtemperaturkompensationsfolie (3) gemäß Schritt S1 folgendes umfasst:
S1-1: Gestalten von zwei Systemgruppen, wobei die erste Systemgruppe keine Farbtemperaturkompensations-Gobos umfasst, die zweite Systemgruppe ein Gobo-Substrat (1) umfasst, und an dem Gobo-Substrat (1) eine Lichtabschirmungsfolie (2) und eine Totalreflexionsfolie (4) angebracht sind;
S1-2: Ermitteln der Spektralparameter des von den beiden Systemgruppen projizierten Lichts, wobei die Spektralparameter der ersten Systemgruppe Referenzspektralparameter sind und die Spektralparameter der zweiten Systemgruppe Kalibrierungsspektralparameter sind;
S1-3: entsprechend der Differenz zwischen den in Schritt S1-2 ermittelten Referenzspektralparametern und Kalibrierungsspektralparametern und unter Zugrundelegung der Referenzspektralparameter als Referenzstandard:
Berechnen eines mittels der Farbtemperaturkompensationsfolie (3) einzustellenden und zu kompensierenden Spektralparameterwertes, wodurch ein Spektralparameter der Farbtemperaturkompensationsfolie bestimmt wird; und
S1-4: Gestalten der Farbtemperaturkompensationsfolie (3) entsprechend dem in Schritt S1-3 erhaltenen Spektralparameter

## Revendications

1. Gobo de compensation de température de couleur (B), comprenant
un substrat de gobo (1), et
un film de masquage de lumière (2) qui est fixé au substrat de gobo (1),
dans lequel le film de masquage de lumière (2) est constitué d'un matériau opaque et muni de découpes évidées (A),
**caractérisé en ce que**
un film de compensation de température de couleur (3) est fixé au substrat de gobo (1) ou au film de masquage de lumière (2), qui est utilisé pour compenser la température de couleur d'une lumière traversant le substrat de gobo (1) et le film de masquage de lumière (2) dans un chemin optique pour maintenir la température de couleur de la lumière projetée traversant le substrat de gobo globalement cohérente avec la température de couleur de la lumière projetée ne traversant pas le substrat de gobo.

2. Gobo de compensation de température de couleur selon la revendication 1, **caractérisé en ce que** le film de compensation de température de couleur (3) est un milieu transparent ou semitransparent ayant une couleur.

3. Gobo de compensation de température de couleur selon la revendication 1, **caractérisé en ce que** le gobo de compensation de température de couleur (B) comprend en outre un film de réflexion totale (4) qui est fixé au substrat de gobo (1), au film de masquage de lumière (2) ou au film de compensation de température de couleur (3), ayant les mêmes découpes évidées (A) que le film de masquage de lumière (2) et utilisé pour intercepter une lumière qui n'a pas besoin d'être projetée.

4. Gobo de compensation de température de couleur selon la revendication 3, **caractérisé en ce que** le film de réflexion totale (4), le film de masquage de lumière (2), le film de compensation de température de couleur (3), et le substrat de gobo (1) sont fixés les uns aux autres dans un ordre quelconque.

5. Gobo de compensation de température de couleur selon la revendication 1, **caractérisé en ce que** le substrat de gobo (1) est en verre ordinaire, en verre de quartz ou en verre saphir.

6. Gobo de compensation de température de couleur selon la revendication 1, **caractérisé en ce que** le film de compensation de température de couleur (3) comprend un film de compensation par augmentation de température de couleur et un film de compensation par diminution de température de couleur.

7. Gobo de compensation de température de couleur selon la revendication 1, **caractérisé en ce que** le film de compensation de température de couleur (3) est constitué d'oxyde de cérium, d'iodure de potassium ou d'oxyde de silicium.

8. Système de compensation de température de couleur comprenant un gobo de compensation de température de couleur (B) selon l'une quelconque des revendications 1 à 7, **caractérisé en ce que** le système comprend en outre une source de lumière (5) et une lentille de projection (6), le gobo de compensation de température de couleur (B) est agencé entre la source de lumière (5) et la lentille de projection (6), et une lumière émise par la source de lumière (5) traverse en séquence le gobo de compensation de température de couleur (B) et la lentille de projection (6) pour projeter un motif ayant une température de couleur conforme à des normes.

9. Procédé de compensation de température de couleur, **caractérisé en ce qu'**un film de compensation de température de couleur (3), un substrat de gobo (1), un film de masquage de lumière (2), un film de réflexion totale (4), une source de lumière (5) et une lentille de projection (6) sont compris, et le film de compensation de température de couleur (3), le film de masquage de lumière (2), le film de réflexion totale (4) et le substrat de gobo (1) sont fixés les uns aux autres dans un ordre quelconque pour former un gobo de compensation de température de couleur (B), le gobo de compensation de température de couleur (B) est agencé entre la source de lumière (5) et la lentille de projection (6) et est utilisé pour partiellement masquer une lumière dans un chemin optique pour former un motif et réaliser une compensation de température de couleur sur le motif, le procédé de compensation de température de couleur comprenant les étapes de :
S1 : la réalisation d'une conception de système de film sur le film de compensation de température de couleur (3) pour obtenir un film de compensation de température de couleur cible ayant une plage de compensation de température de couleur conforme à des réglementations ;
S2: la fixation, de manière respective, du film de masquage de lumière (2), du film de réflexion totale (4), et du film de compensation de température de couleur (3) obtenus à l'étape S1 au substrat de gobo (1) dans un ordre quelconque pour obtenir un gobo de compensation de température de couleur (B) ;
S3: le montage du gobo de compensation de température de couleur (B) obtenu à l'étape S2 sur une roue à gobos, et le montage de la roue à gobos entre la source de lumière (5) et la lentille de projection (6), de façon à former un système de compensation de température de couleur lorsque les centres optiques de la source de lumière (5), de la lentille de projection (6) et du gobo de compensation de température de couleur (B) sont sur la même ligne droite ; et
S4: l'allumage de la source de lumière (5), de sorte que le système de compensation de température de couleur fonctionne, et que le film de compensation de température de couleur (3) sur le gobo de compensation de température de couleur (B) ajuste la température de couleur d'une lumière dans le chemin optique, de façon à compenser des variations de température de couleur de la lumière provenant de la source de lumière provoquées par la réflexion ou la réfraction ou l'absorption de la lumière par le substrat de gobo (1), le film de masquage de lumière (2) et le film de réflexion totale (4), et pour réduire la différence de température de couleur entre la lumière projetée et une lumière projetée qui ne traverse pas le substrat de gobo (1), ce qui rend la lumière projetée traversant le substrat de gobo (1) similaire à la lumière projetée ne traversant pas le substrat de gobo (1) en termes de température de couleur.

10. Procédé de compensation de température de couleur selon la revendication 9, **caractérisé en ce que** le procédé de conception de système de film pour le film de compensation de température de couleur (3) à l'étape S1 comprend:
S1-1: la conception de deux groupes de systèmes, dans lequel le premier groupe de systèmes ne comprend pas de gobos de compensation de température de couleur, le second groupe de systèmes comprend un substrat de gobo (1), et un film de masquage de lumière (2) et un film de réflexion totale (4) sont fixés au substrat de gobo (1) ;
S1-2: l'obtention de paramètres spectraux d'une lumière projetée par les deux groupes de systèmes, dans lequel les paramètres spectraux du premier groupe de systèmes sont des paramètres spectraux de référence, et les paramètres spectraux du second groupe de systèmes sont des paramètres spectraux d'étalonnage ;
S1-3: selon la différence entre les paramètres spectraux de référence et les paramètres spectraux d'étalonnage obtenus à l'étape S1-2, et en prenant les paramètres spectraux de référence comme étalon de référence, le calcul d'une valeur de paramètre spectral nécessitant être ajustée et compensée par le film de compensation de température de couleur (3), ce qui conçoit un paramètre spectral du film de compensation de température de couleur ; et
S1-4: la conception du film de compensation de température de couleur (3) selon le paramètre spectral obtenu à l'étape S1-3.
